# EUROPEAN PATENT APPLICATION

(11) **EP 4 610 831 A1**
(43) Date of publication of application: **03.09.2025**
(21) Application number: 24159920.8
(22) Date of filing: 27.02.2024
(51) Int. Cl.: G06F 11/16

(54) **PROCESSING SYSTEM AND METHOD FOR FAULT DETECTION**

(71) Applicant: AImotive Kft., 1025 Budapest (HU)
(72) Inventor: MONOSTORI, Balázs, H-1023 Budapest (HU); NAGY, Gyula, H-1114 Budapest (HU); SZUCS, Imre, H-5420 Túrkeve (HU); VARGA, Márton, H- 1085 Budapest (HU); PÁL, Tamás, H-1164 Budapest (HU)
(74) Representative: Vossius & Partner Patentanwälte Rechtsanwälte mbB

(57) **Abstract**

The present disclosure relates to a processing system comprising at least one control path and at least one data path, and at least one reference path, wherein each of the reference paths is functionally equivalent to and associated with a respective one of the at least one control paths and at least one comparison location for fault detection. The processing system is configured to compare the at least one control path and the at least one associated reference path at the at least one comparison location for fault detection. The disclosure also relates to a corresponding method.

## Description

The present disclosure relates to a processing system and method for fault detection.

Prior to recent years, in the electronics of safety critical areas (e.g., automotive, medical, railway, aviation, nuclear, military, etc.) there was no need for high, cutting-edge computational performance to implement the intended functionality since the computational complexity has not been that high.

However, the introduction of machine learning / artificial intelligence methods to these industries resulted in an increasing demand for the technologically achievable best performance (i.e., high-performance computing).

While the well-known, widely accepted and proven in use functional safety practices still applicable at hardware level, their straightforward implementation very often becomes a bottleneck and causes limitations in the computational performance, PPA (performance-power-area) trade-off or manufacturability of a device.

The present disclosure has been made to overcome or at least reduce these limitations.

The invention is specified by the independent claims. Preferred embodiments are defined in the dependent claims. In the following description, although numerous features may be designated as optional, it is nevertheless acknowledged that all features comprised in the independent claims are not to be read as optional.

In particular, the present disclosure relates to a processing system comprising at least one control path and at least one data path, and at least one reference path, wherein each of the reference paths is functionally equivalent to and associated with a respective one of the at least one control paths and at least one comparison location for fault detection. The processing system is configured to compare the at least one control path and the at least one associated reference path at the at least one comparison location for fault detection.

Various embodiments may preferably implement the following features.

Preferably, the at least one comparison location is on a low level in hierarchy.

Preferably, the low level is a register transfer level, RTL, hierarchy.

Preferably, the system further comprises at least one non safety critical path being separately provided from the at least one control, data and reference paths.

Preferably, at least one of the at least one data path, the at least one control path, the at least one reference path and the at least one non safety critical path comprises at least one processing unit.

Preferably, at least one of the at least one data path, the at least one control path, the at least one reference path or the at least one non safety critical path comprises at least one memory.

Preferably, the at least one control path and/or the at least one reference path are asynchronous.

Preferably, the processing system is configured to detect faults on the at least one data path using a method of protection of the data path, more preferably error detection code, EDC.

Preferably, the at least one comparison location for fault detection is provided at critical system points, preferably at a data manipulation point or at a register of a finite state machine, FSM.

Preferably, the processing system is a system on chip, SoC, a neural network processing unit, NPU, a video processing unit, a graphics processing unit, GPU, a parallel system or a distributed system.

Preferably, the system comprises at least one central processing unit configured to perform the comparison and/or the EDC.

Preferably, at least one of the at least one data path, the at least one control path, the at least one reference path and the at least one non safety critical path comprises at least one combinatorial logic element.

The present disclosure further relates to a computer implemented method comprising providing at least one control path and at least one data path, providing at least one reference path, wherein each of the reference paths is functionally equivalent to and associated with a respective one of the at least one control paths, and comparing the at least one control path and the at least one associated reference path at at least one comparison point for fault detection.

Various embodiments may preferably implement the following features.

Preferably, the method further comprises providing at least one non safety critical path being separately provided from the at least one control path, data path and reference path.

Preferably, the method further comprises providing an asynchronization of the at least one control path and/or the at least one reference path.

Preferably, the method further comprises detecting faults on the at least one data path using a method of protection of the data path, preferably error detection code, EDC.

Preferably, the at least one comparison location for fault detection is provided at critical system points, preferably at a data manipulation point or at a register of a finite state machine, FSM.

Other aspects, features, and advantages will be apparent from the summary above, as well as from the description that follows, including the figures and the claims.
Fig. 1 shows a configuration according to an embodiment of the present disclosure.
Fig. 2 shows a configuration according to an embodiment of the present disclosure.
Fig. 3 shows a flowchart according to an embodiment of the present disclosure.

Functional safety standards for E/E/PE (electrical, electronic, programmable electronic) systems require high diagnostic coverage for detecting faults while the system is under operation. Most of the solutions use some types of redundancy in the design to be able to detect whether one of the duplicated parts behaves differently from the other. However, the problem became even more complicated in the technology domain of high-performance computing (HPC). Digital HPC designs are usually large, complex and custom solutions to get a better PPA (performance, power, area). The functional safety implementation for complex digital systems leads to a tradeoff between high diagnostic coverage and resources like area and power consumption.

These requirements are, inter alia, triggered by the automotive industry where the production quantity makes more pressure on cost of silicon area and power. However, the subject-matter of the present disclosure can be applied to a variety of technical fields. The presented solution is applicable and useful for any other safety critical application (i.e., any kind of E/E/PE system).

In a configuration according to an embodiment, the design (processing system) is split into different parts. The embodiment comprises at least one control path 12, at least one data path 11 and at least one non safety critical path 13.

The control path 12 and the data path 11 may be denoted as safety critical paths. The non safety critical path 13 may relate to the rest of the design where a fault cannot lead to any critical malfunction, e.g., profiling and debugging features. All paths may be provided on a low level or lowest level of hierarchy.

In an embodiment, only the control logic (control path 12) of the design is duplicated. The faults on the data path 11 may be detected with a different mechanism (e.g., error detection code, EDC), so the memories and registers on the data path 11 may not be duplicated.

The duplicated parts may have the same inputs. In an embodiment, not only the outputs of a design unit are compared, because in this way detect latent faults may not be detected and safety goals may not be fulfilled. When the control parts (i.e., the control path 12) are duplicated in the lowest level, all elements of the duplicated design may be compared. To save area and power, comparison points may be only implemented where the control path 12 can have direct effect on the data path 11 or on critical points having a high influence on the operation. This may include registers of FSMs (finite state machines). Hence, only a minimal set of signals are protected by the area-costly duplication, while the data path 11 is covered with more area-effective protection mechanisms. This way, the diagnostic coverage remains high while the area overhead for the safety mechanisms are lower than traditional methods (such as lockstep). The duplicated control path may be referred to as a reference path 14.

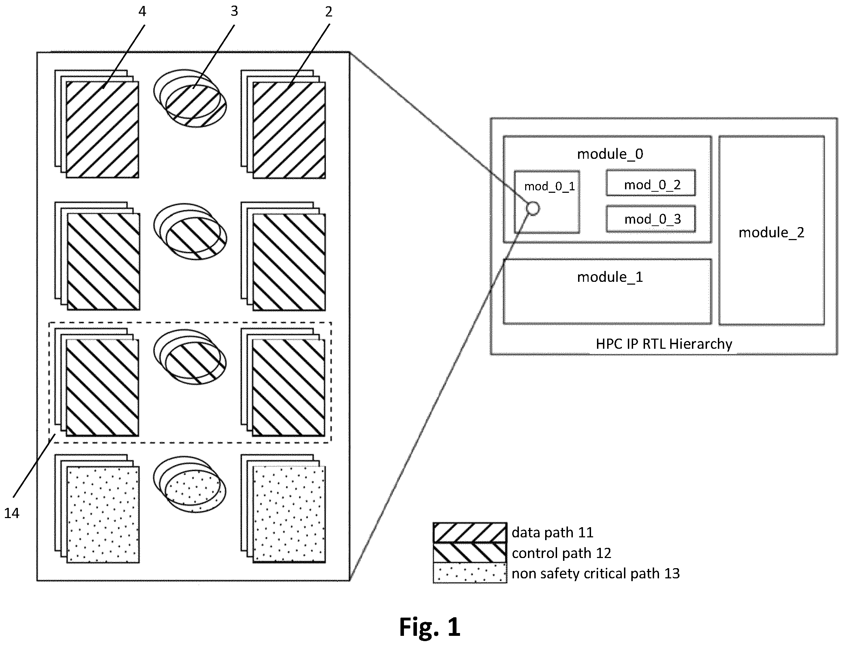

Fig. 1 shows a processing system according to an embodiment of the present disclosure. Fig. 1 relates to a High Performance Computing (HPC) IP Register Transfer Level (RTL) but the present disclosure is not limited thereto. The HPC IP RTL may comprise at least one module as shown in Fig. 1.

Exemplarily, the module mod_0_1 comprises a data path 11, a control path 12, a duplicated control path indicated by the dashed box, also referred to as a reference path 14, and a non safety critical path 13. Each of the paths 11, 12, 13, 14 may also be provided in plural.

Moreover, each of the paths 11, 12, 13, 14 may comprise at least one processing unit.

For example, each of the paths 11, 12, 13, 14 may comprise at least one memory 2 and/or at least one combinatorial logic element 3 and/or at least one D flip flop (DFF) 4. Other kinds of processing units, sensors, or various kinds of memories may also be provided.

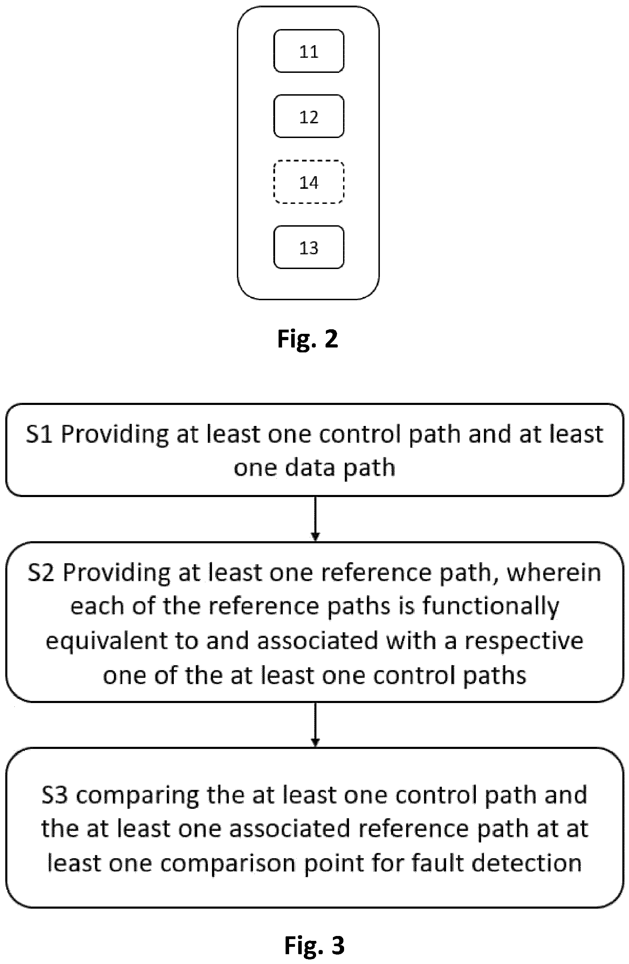

In particular and with reference to Fig. 2, a processing system according to an embodiment comprises at least one control path 12 and at least one data path 11. The at least one control path 12 and the at least one data path 11 may be referred to as a functionally complete path. The system further comprises at least one reference path 14, wherein each of the reference paths 14 is functionally equivalent to and associated with a respective one of the at least one control paths 12. The term functionally equivalent may encompass that the control path 12 and the corresponding reference path 14 are identical or non-identical but configured to provide the same functionality. The reference path 14 shown in dashed lines may also be referred to as a duplication of the control path 12. The processing system further comprises at least one comparison location for fault detection.

Optionally, a non safety critical path 13 may be provided as shown in Fig. 2 (see below).

It is noted that any location in the system may be able to compare the control path 12 and the reference path 14. The aim of the comparison is to detect a fault, wherein detecting a fault might be detection of a latent fault as well. The comparison location may also be a separate processing unit or comparison unit. The comparison location may also be referred to as fault detection point/location.

The processing system is configured to compare the at least one control path 12 and the at least one associated reference path 14 at the at least one comparison location for fault detection.

In an embodiment, the at least one comparison location for fault detection where the comparison is made is on a low level in hierarchy. The low level may for example be a register transfer level, RTL, hierarchy.

In an embodiment, the system further comprises at least one non safety critical path 13 being separately provided from the at least one control 12, data 11 and reference paths 14.

In an embodiment, at least one of the at least one data path 11, the at least one control path 12, the at least one reference path 14 and the at least one non safety critical path 13 comprises at least one processing unit.

In an embodiment, at least one of the at least one data path 11, the at least one control path 12, the at least one reference path 14, or the at least one non safety critical path comprises at least one memory.

In an embodiment, the at least one control path 12 and/or the at least one reference path 14 are asynchronous. However, the control path 12 and the reference path 14 might be synchronised. In particular, a few clock cycles delay may be provided between the control path 12 and the reference path 14. The comparison may be done at the comparison location point when both control signals reach it.

In an embodiment, the processing system is configured to detect faults on the at least one data path 12 using a method of protection of the data path 12, e.g., error detection code, EDC.

In an embodiment, the at least one comparison location for fault detection is provided at critical system points, preferably at a data manipulation point or at a register of a finite state machine, FSM.

In an embodiment, the processing system is a system on chip, SoC, a neural network processing unit, NPU, a video processing unit, a graphics processing unit, GPU, a parallel system or a distributed system.

In an embodiment, the system comprises at least one central processing unit configured to perform the comparison and/or the EDC.

In an embodiment, at least one of the at least one data path 11, the at least one control path 12, the at least one reference path 14 and the at least one non safety critical path 13 comprises at least one combinatorial logic element.

The disclosure further encompasses a corresponding computer implemented method. The method is described with reference to Fig. 3 and comprises providing S1 at least one control path 12 and at least one data path 11 which may be referred to as at least one functionally complete path. The method further comprises providing S2 at least one reference path 14, wherein each of the reference paths 14 is functionally equivalent to and associated with a respective one of the at least one control paths 12 and comparing S3 the at least one control path 12 and the at least one associated reference path 14 at at least one comparison point for fault detection.

In an embodiment, the method further comprises providing at least one non safety critical path 13 being separately provided from the at least one control path 11, data path 12 and reference path 14.

In an embodiment, the method further comprises providing an asynchronization of the at least one control path 12 and/or the at least one reference path 14.

In an embodiment, the method further comprises detecting faults on the at least one data path 11 using a method of protection of the data path 11 like error detection code, EDC.

In an embodiment, the at least one comparison location for fault detection is provided at critical system points, preferably at a data manipulation point or at a register of a finite state machine, FSM.

Partial duplication as presented in the present disclosure has an advantage that it consumes less area and power. Duplicating full modules on a higher level leads to area redundancy where the data paths and the non-safety critical paths are duplicated unnecessarily.

On the other hand, duplicating on the lowest abstraction level (register transfer level) gives the possibility of comparisons on the lowest level where hidden failures can be detected while full duplication on a high level with output comparison may not detect them. The diagnostic coverage is also scalable in this way. The module that should have the control path duplication can be selected. The comparison points can also be scaled up to increase the diagnostic coverage even for the multiple-point faults. These scaling options are not viable for full duplication of higher-level modules as done in the prior art, because comparing the internal differences requires unmanageable resources.

In addition, in the prior art, it is possible that output comparison is too late and violates the given safety goal. In these cases, the flexibility of the internal detection points as presented herein provide a solution to this problem.

Carefully selected, limited comparison points can save more area and power.

Additional configuration features may include that for each part of the design, even on the lower level, a different duplication level can be configured. With this the design elements in the lowest level can be differentiated to save more area. Moreover, design elements with different levels of duplication can be connected. The disclosure provides a flexible configuration for cases where it is hard to split the control and data paths (e.g., complicated arithmetic algorithms like compression, where data and control information is transformed in a fluid way).

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any one of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any one of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any one of the various illustrative logical blocks, units, processors, means, circuits, methods and functions described in connection with the aspects disclosed herein can be implemented by electronic hardware (e.g., a digital implementation, an analogue implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure.

In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "unit" as used herein, refers to software, firmware, hardware, and any combination of these elements for performing the associated functions described herein.

Additionally, for purpose of discussion, the various units are described as discrete units; however, as would be apparent to one of ordinary skill in the art, two or more units may be combined to form a single unit that performs the associated functions according embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. Processing system comprising:
at least one control path (12) and at least one data path (11), and
at least one reference path (14), wherein each of the reference paths (14) is functionally equivalent to and associated with a respective one of the at least one control paths (12), and
at least one comparison location for fault detection,
wherein the processing system is configured to compare the at least one control path (12) and the at least one associated reference path (14) at the at least one comparison location for fault detection.

2. Processing system according to claim 1, wherein the at least one comparison location is on a low level in hierarchy.

3. Processing system according to claim 2, wherein the low level is a register transfer level, RTL, hierarchy.

4. Processing system according to claim 1 or 2, further comprising at least one non safety critical path (13) being separately provided from the at least one control, data and reference paths (14).

5. Processing system according to any one of claims 1 to 4, wherein the at least one control path (12) and/or the at least one reference path (14) are asynchronous.

6. Processing system according to any one of claims 1 to 5, wherein the processing system is configured to detect faults on the at least one data path (11) using a method of protection of the data path (11), preferably error detection code, EDC.

7. Processing system according to any one of claims 1 to 6, wherein the at least one comparison location for fault detection is provided at critical system points, preferably at a data manipulation point or at a register of a finite state machine, FSM.

8. Processing system according to any one of claims 1 to 7, wherein the processing system is a system on chip, SoC, a neural network processing unit, NPU, a video processing unit, a graphics processing unit, GPU, a parallel system or a distributed system.

9. Processing system according to any one of claims 1 to 8, wherein the system comprises at least one central processing unit configured to perform the comparison and/or the EDC.

10. Processing system according to any one of claims 1 to 9, wherein at least one of the at least one data path (11), the at least one control path (12), the at least one reference path (14) and the at least one non safety critical path (13) comprises at least one combinatorial logic element.

11. Computer implemented method comprising:
providing (S1) at least one control path (12) and at least one data path (11),
providing (S2) at least one reference path (14), wherein each of the reference paths (14) is functionally equivalent to and associated with a respective one of the at least one control paths (12), and
comparing (S3) the at least one control path (12) and the at least one associated reference path (14) at at least one comparison point for fault detection.

12. Method according to claim 11, further comprising providing at least one non safety critical path (13) being separately provided from the at least one control path (12), data path (11) and reference path (14).

13. Method according to claims 11 or 12, further comprising providing an asynchronization of the at least one control path (12) and/or the at least one reference path (14).

14. Method according to any one of claims 11 to 13, further comprising detecting faults on the at least one data path (11) using a method of protection of the data path (11), preferably error detection code, EDC.

15. Method according to any one of claims 11 to 14, wherein the at least one comparison location for fault detection is provided at critical system points, preferably at a data manipulation point or at a register of a finite state machine, FSM.
